# EUROPEAN PATENT APPLICATION

(11) **EP 1 211 586 A1**
(43) Date of publication of application: **05.06.2002**
(21) Application number: 01202163.0
(22) Date of filing: 05.06.2001
(51) Int. Cl.: G05G 1/14, B60K 26/02

(54) **Integrated electronic throttle control assembly for a pedal**

(30) Priority: 29.11.2000 US 727342
(71) Applicant: Teleflex Incorporated, Plymouth Meeting, PA 19462 (US)
(72) Inventor: Kalsi, Avtar, Windsor, Ontario, N8R 2J9 (CA)
(74) Representative: Wharton, Peter Robert

(57) **Abstract**

This invention provides a method and assembly for calibrating a pedal assembly **(10)** having a pedal arm **(16)** pivotally mounted in an open housing **(12)**. An electrical resistor system is disposed in the housing **(12)**, which allows for changing relative resistance in response to pivotal movement of the pedal arm **(16)**. The pedal arm **(16)** pivots to a first position, sending an electrical current through the resistor system providing an electrical resistance. The resistance is compared to a specific value and then an adjustment resistor **(24)** is laser trimmed until the resistance reaches the specified value.

## Description

### BACKGROUND OF THE INVENTION

### 1. Field of the Invention

The subject invention relates to a method and apparatus for calibrating the electrical resistance provided by a pedal assembly of the type used in automotive vehicles. More specifically, the pedal assembly includes a pedal arm pivotally mounted in an open housing which is closed by a housing cover with a variable electrical resistor system disposed in the housing, for changing relative resistance in response to pivotal movement of said pedal arm.

### 2. Description of the Prior Art

Pedal assemblies are used in vehicles to control the movement of the vehicle. Traditionally, pedal assemblies include mechanical connections to the respective vehicle system and pedal controls. With contemporary vehicle systems incorporating more electronic controls, many pedal assemblies provide electrical links between the pedal and the vehicle systems. The electrical link eliminates the need for mechanical linkage parts and thus, reduces cost and increases packaging space for other vehicle components.

Examples of vehicle pedal assemblies incorporating electronic controls are shown in Patent Nos. 5,697,260; 5,819,593 and 5,768,946. These pedal assemblies send various electric signals to the vehicle systems generated from pivotal movement of the pedal arm when a force is applied to the pedal. Each position of the pedal arm generates a different electrical current corresponding to different electrical signals. The electrical current is sent through the resistor system at a predetermined position to provide an electrical resistance. The electrical resistance is compared to a specific value and the resistance is adjusted to reach the predetermined value.

Until recently, electrical pedal assemblies were used primarily in diesel powered engines. The diesel vehicle systems required little if any adjustments to the resistance of the electrical pedal assemblies. However, with the use of the electrical pedal assemblies' with gasoline powered engines, the resistance in these assemblies must be precisely calibrated. Calibrating the resistance in the prior art electrical pedal assemblies involved either tightening or loosening the electrical components, i.e., the adjustment of the physical position of the component. While this method is adequate for diesel powered engines it does not provide the precise calibration needed for gasoline powered engines.

Another example of an electrical pedal assembly is shown in U.S. Patent Application No. 09/314,481, filed May 18, 1999. The resistance is adjusted by removing material from the resistor. Although, this method provides for more precise calibration, access to the resistor, to remove material is difficult, because the resistor is an integral part of the entire electrical pedal assembly and is located proximately to other important electrical components. This method of changing the resistance often results in damage to other components.

Thus, it would be desirable to have an improved electrical pedal assembly that provides an efficient method and apparatus for changing the resistance of an electrical pedal assembly. Also, it is desirable to provide a precise method and apparatus for changing the resistance of an electrical pedal assembly.

### SUMMARY OF THE INVENTION AND ADVANTAGES

This invention provides a method of calibrating a pedal assembly having a pedal arm pivotally mounted in an open housing. An electrical resistor system is disposed in the housing, which allows for changing relative resistance in response to pivotal movement of the pedal arm. The method comprises of the steps of pivoting the pedal arm to a first predetermined position, sending an electrical current through the resistor system at the predetermined position to provide an electrical resistance, comparing the electrical resistance to a predetermined value, adjusting the resistor system to provide an electrical resistance to match the predetermined value, and placing the cover on the housing to close the housing. The method is characterized by providing the resistor system with a primary resistor supported on the housing, a contact on the pedal arm for sliding engagement with the primary resistor and an adjustment resistor to change the resistance to electrical current by trimming material from the adjustment resistor and thereafter placing the cover on the housing.

This invention also provides a pedal assembly for electronically controlling a vehicle wherein the assembly includes a housing, a housing cover, a pedal arm pivotally mounted to the housing, and a variable resistor system disposed in the housing for providing electrical resistance proportional to pivotal movement of the pedal arm. The assembly is characterized by the variable resistor system having a primary resistor supported on the housing, a contact on said pedal arm for sliding engagement with the primary resistor and an adjustment resistor for adjusting the resistance to change the resistance to a predetermined value by trimming material from the adjustment resistor.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is perspective view of the preferred embodiment of the electrical pedal assembly shown with open housing;
- Figure 2 is an exploded view of the primary, secondary and adjustment resistors;

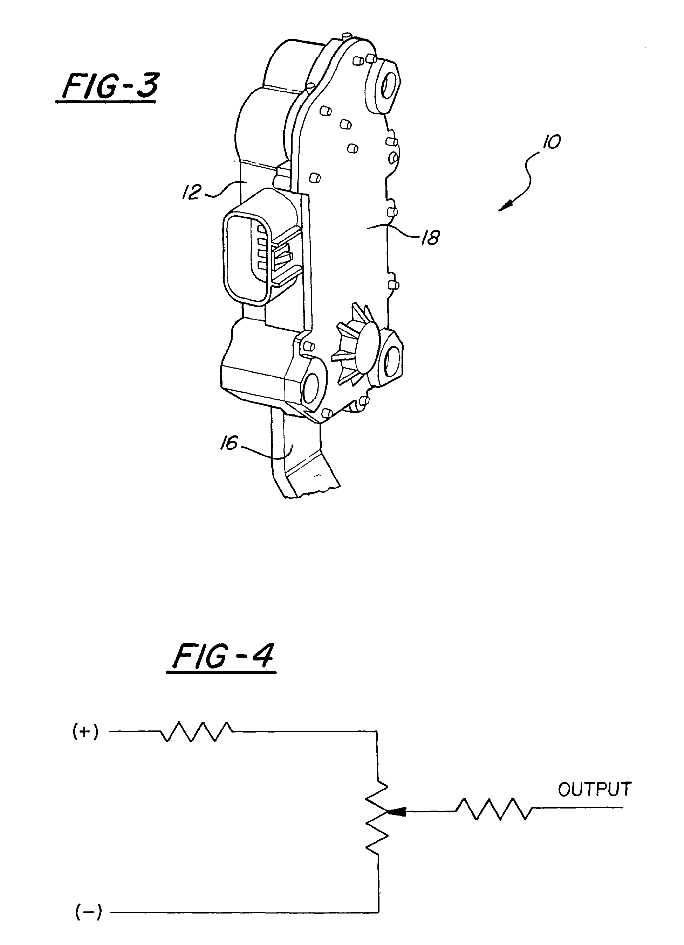

Figure 3 is a perspective view showing the closed housing;
   and
Figure 4 is a schematic of the primary and adjustment circuits.

### DETAILED DESCRIPTION OF THE PREFERRED EMBODIMENT

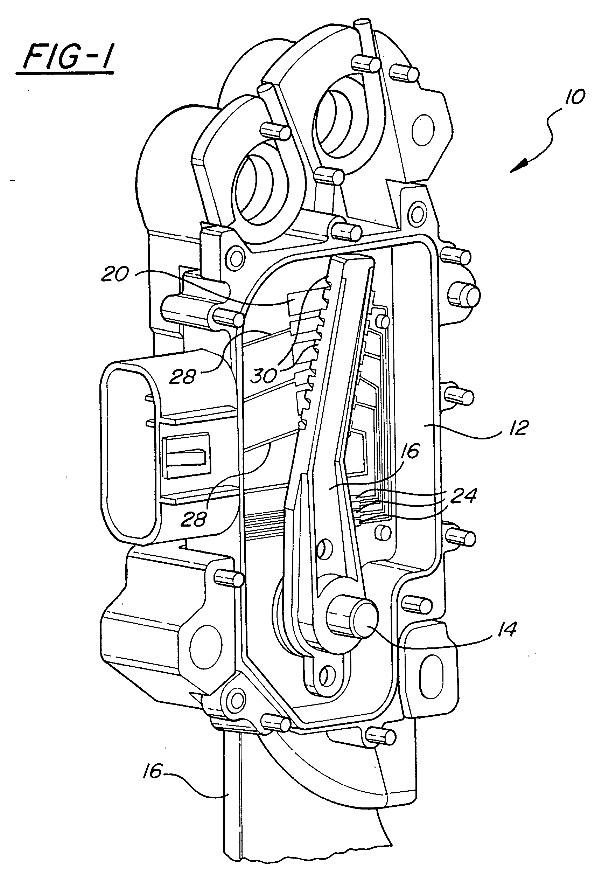

Referring to the Figures, wherein like numerals indicate like or corresponding parts throughout the several views, a pedal assembly is shown generally at **10** in Figure **1**. The pedal assembly **10** includes a pedal arm **16** pivotally mounted in an open housing **12.** A housing cover **18** closes the housing **12.** The housing **12** has a variable electrical resistor system disposed in it. The variable resistor system comprises a primary resistor **20,** which is supported on the housing **12,** a contact on the pedal arm **16** for sliding engagement with the primary resistor **20,** and an adjustment resistor **24.** The variable resistance system changes the relative resistance in response to pivotal movement of the pedal arm **16.** The pedal arm **16** includes an axial projection **30,** which provides the contact for sliding engagement between the pedal arm **16** and the primary resistor **20.** As the pedal arm **16** pivots it moves in an arc with respect to the primary resistor **20.** Each pivotal position of the pedal arm **16** corresponds to a specific electrical current. The current creates an electrical resistance as it passes through the resistors, which corresponds to a specific value. The pedal arm **16** is pivoted to a first predetermined position, sending an electrical current through the primary resistor **20** at the predetermined position. The current flows to an adjustment resistor **24,** which is electrically connected to the primary resistor. The electrical resistance is compared to a specified value and then changed until it reaches this predetermined value. Removing material from the resistor system changes the resistance. This is accomplished by removing material from the adjustment resistor **24** using laser trimming. The adjustment resistor **24** is trimmed until the resistance reaches the specified value. After the adjustment resistor **24** has been trimmed, the open housing **12** is closed by placing the housing cover **18** on the housing **12.**

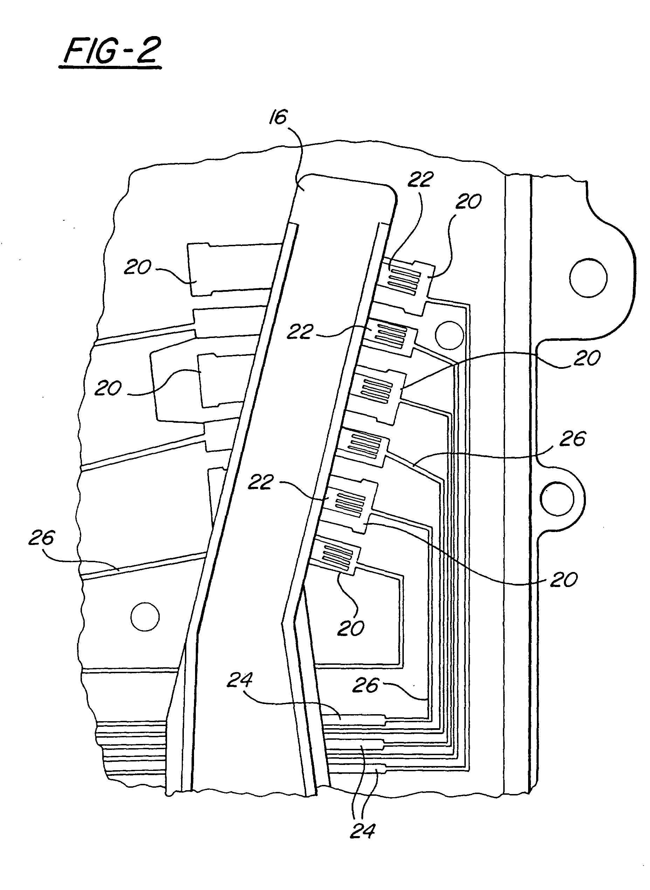

As shown in Figure 2, the assembly provides an adjustment resistor **24** positioned separately and away from the path of movement of the pedal arm **16.** This feature allows for easy, unencumbered access to the resistor system for measuring or changing the resistance. The resistance can be trimmed or changed without interfering or damaging any other components of the electrical pedal assembly **10.** Also shown in Figure 2, are a series of secondary resistors **22** placed on the top surface of and are in parallel to the primary resistor **20.** The secondary resistors **22** receive any excess voltage generated by the pedal assembly **10** and prevents voltage overload damage to the electrical circuit.

When the pedal arm **16** pivots to sliding engagement with the primary resistor **20,** friction is generated. This friction may cause the primary resistor **20** to wear away from the housing **12.** When this type of wear occurs, the pedal assembly **10** becomes ineffective and requires replacement. However, the preferred embodiment of the invention provides an assembly **10** which includes a plurality of axial projections **30** on the pedal arm **16** and a plurality of primary **20** and adjustment resistors **24.** This feature provides redundancy to the pedal assembly **10** in case a primary resistor **20** wears away in this manner. Each axial projection **30** corresponds to and is aligned with one of specific primary resistors **20,** each of which is electrically connected to a specific adjustment resistor **24.** The redundancy provided by the assembly **10** provides a longer life.

## Claims

1. A method of calibrating a pedal assembly **(10)** having a pedal arm **(16)** pivotally mounted in an open housing **(12)** which is closed by a housing cover **(18)** with a variable electrical resistor system disposed in the housing **(12)** for changing relative resistance in response to pivotal movement of said pedal arm **(16);** said method comprising of the steps of;
pivoting the pedal arm **(16)** to a first predetermined position,
sending an electrical current through the resistor system at the predetermined position to provide an electrical resistance,
comparing the electrical resistance to a predetermined value,
adjusting the resistor system to provide an electrical resistance to match the predetermined value, and
placing the cover **(18)** on the housing **(12)** to close the housing **(12),**
said method **characterized by** providing the resistor system with a primary resistor **(20)** supported on said housing **(12),** a contact on said pedal arm **(16)** for sliding engagement with said primary resistor **(20)** and an adjustment resistor **(24)** to change the resistance to electrical current and thereafter placing the cover on the housing.

2. A method as set forth in claim 1 further defined as positioning the adjustment resistor **(24)** removed from the path of pivotal movement of said pedal arm **(16)** for access.

3. A method as set forth in claim 2 further defined as applying a laser to the adjustment resistor **(24)** for the removing the material therefrom.

4. A pedal assembly, for electronically controlling a vehicle comprising of;
an open housing **(12),**
a housing cover **(18),**
a pedal arm **(16)** pivotally mounted to said housing **(12),** and
a variable resistor system disposed in said housing **(12)** for providing electrical resistance proportional to pivotal movement of said pedal arm **(16),**
said assembly **characterized by** said variable resistor system having a primary resistor **(20)** supported on said housing **(12),** a contact on said pedal arm **(16)** for sliding engagement with said primary resistor **(20)** and an adjustment resistor **(24)** for adjusting the resistance to change the resistance to a predetermined value by trimming material from said adjustment resistor **(24).**

5. An assembly as set forth in claim 4 wherein said adjustment resistor **(24)** is spatially positioned removed from the path of pivotal movement of said pedal arm **(16)** to allow unencumbered access for adjusting the electrical resistance.

6. An assembly as set forth in claim 5 wherein said primary resistor **(20)** is paired and in series with said adjustment resistor **(24).**

7. An assembly as set forth in claim 6 wherein said pedal arm **(16)** includes an axial projection **(30)** defining said contact.

8. An assembly as set forth in claim 7 wherein said variable resistor system further includes a secondary resistor positioned on and in series with said primary resistor **(20)** for preserving the resistor system against excess voltage.

9. An assembly as set forth in claim 8 including a plurality of pairs of primary **(20)** and adjustment **(24)**resistors.

10. An assembly as set forth in claim 10 wherein said pedal arm **(16)** includes a plurality of said axial projections **(30)** with each projection **(30)** defining a contact in engagement with one of said primary resistors **(20).**

11. An assembly as set forth in claim 10 wherein said pedal arm **(16)** pivots about a pivot axis **(14).**

12. An assembly as set forth in claim 11 wherein said pedal arm **(16)** is formed of plastic.

13. An assembly as set forth in claim 12 wherein said primary resistor **(20),** said secondary resistor **(22)** said adjustment resistors **(24)** are formed of resistive paint.
